(19) **Europäisches Patentamt**

**European Patent Office**

**Office européen des brevets**

(11) **EP 0 688 507 B1**

(12) **FASCICULE DE BREVET EUROPEEN**

(45) Date de publication et mention
de la délivrance du brevet:
**08.11.2000 Bulletin 2000/45**

(51) Int Cl.[7]: **A23L 1/182**, A23L 1/10

(21) Numéro de dépôt: **95401416.3**

(22) Date de dépôt: **16.06.1995**

(54) **Grain de riz et son procédé de préparation**

Reiskorn und Verfahren zur Herstellung

Rice grain and process for preparation

(84) Etats contractants désignés:
**BE DE ES FR GB GR IT NL PT**

(30) Priorité: **24.06.1994 FR 9407788**

(43) Date de publication de la demande:
**27.12.1995 Bulletin 1995/52**

(73) Titulaire: **SICA FRANCE RIZ**
**13200 Arles (FR)**

(72) Inventeurs:
• **Arekion, Isabelle**
 **F-13013 Marseille (FR)**
• **Esclauze, Sylvie**
 **F-07200 Aubenas (FR)**
• **Minier, Chantal**
 **F-13400 Aubagne (FR)**
• **Moureau, Jacques**
 **F-13200 Arles (FR)**

(74) Mandataire: **Eidelsberg, Victor Albert et al**
**Cabinet Flechner**
**22, Avenue de Friedland**
**75008 Paris (FR)**

(56) Documents cités:
 **EP-A- 0 352 939          GB-A- 2 173 986**
 **US-A- 5 316 783**

 • **DATABASE WPI Week 9252, Derwent**
 **Publications Ltd., London, GB; AN 92-424507 &**
 **BR-A-9 101 467 (AGRICAPE PROD.**
 **ALIMENTARES SA) 24 Novembre 1992**
 • **Norme Francaise NF ISO 6648 (Octobre 1993)**
 **(indice de classement V 03-744) (ISSN**
 **0335-3931)**

Remarques:
Le dossier contient des informations techniques
présentées postérieurement au dépôt de la
demande et ne figurant pas dans le présent
fascicule.

EP 0 688 507 B1

## Description

La présente invention se rapporte aux grains de riz et à leurs procédés de préparation.

Au brevet des Etats-Unis d'Amérique n° 5 130 153, on décrit un procédé d'étuvage du riz, qui consiste à traiter le riz par de l'eau à une température allant jusqu'à son point d'ébullition pour porter sa teneur en eau entre 17 et 28 % et à traiter par la vapeur le riz trempé à une température de 100 à 125°C pour porter sa teneur en eau entre 19 et 30 %, à chauffer le riz traité à la vapeur en vase clos sous pression et en utilisant de la chaleur sèche à une température minimum qui dépend de la teneur en humidité, à réduire la pression sur le riz en 1 à 10 minutes à la pression atmosphérique de manière à faire s'évaporer l'eau du riz chauffé pour réduire sa température à 100°C environ et sa teneur en eau à 17 à 24 % puis à sécher le riz. Grâce à cela, on obtiendrait un riz étuvé qui, lorsqu'il est cuit pendant 18 minutes environ dans de l'eau bouillante donc sensiblement pendant 2 minutes de moins qu'habituellement, est moins collant, plus fin et se présente sous forme de grain plus long et moins coloré que du riz étuvé classique cuit dans les mêmes conditions.

Au Database WPI, week 9252, Derwent Publication Ltd., London, GB, on décrit un procédé de préparation de grains de riz, comportant les étapes suivantes :

- mise en contact avec de l'eau et de la vapeur saturée jusqu'à ce que la teneur en eau atteigne 30% en poids,
- injection de vapeur d'eau afin de gélatiniser les grains,
- séchage dans une enceinte chauffée et mise sous vide (600 mm Hg, soit 0,8 bar) afin de réduire la teneur en eau jusqu'à atteindre 18% en poids.

L'invention vise en revanche à obtenir des grains de riz qui, après 10 minutes de cuisson seulement, sont parfaitement comestibles, en ayant les mêmes qualités gustatives que du riz étuvé ayant'subi une cuisson de 17 minutes environ.

L'invention a donc pour objet un procédé de préparation de grains de riz tel que défini à la revendication 3.

La teneur de 30 % est absolument nécessaire pour obtenir la gélatinisation complète de l'amidon. Mais si cette teneur est obtenue, non pas par un simple stade de trempage sans élévation excessive de la température, mais par des traitements brutaux notamment à la vapeur, il se produit une modification des amidons du riz, en sorte que l'on n'obtient plus ultérieurement les mêmes qualités organoleptiques. Néanmoins, lorsque l'on se dispense de ces traitements brutaux à la vapeur qui avaient aussi pour rôle d'éliminer l'eau surperficielle des grains de riz issue des trempages, il faut prévoir, intermédiairement entre la mise en contact avec de l'eau et l'envoi de vapeur d'eau sous pression, un stade de séchage sous vide d'au plus 0,6 bar absolu pour que les grains de riz n'ait plus de couche d'eau en surface et pour qu'ainsi le traitement à la vapeur d'eau sous pression puisse s'effectuer correctement sans que le grain de riz ne gonfle trop et n'éclate.

Au US-A-5 316 783, on ne propose pas de traiter du riz par un stade de séchage sous vide. Le GB-A-2 173 986 propose un stade de séchage sous vide du riz, mais ce stade est effectué avant l'immersion dans de l'eau et est destiné à faciliter la pénétration ultérieure de l'eau dans les grains amylacées, alors que suivant l'invention le stade de séchage sous vide a lieu après le traitement à l'eau et est destiné à empêcher que les grains ne gonflent ou n'éclatent lors du traitement ultérieur à la vapeur d'eau.

Le premier stade du procédé selon l'invention consiste à mettre des grains de riz cargo en contact avec suffisamment d'eau pour que les grains y soient complètement immergés. La quantité d'eau en poids peut représenter de 2 à 10 fois celle des grains de riz.

La durée pour que la teneur en eau des grains de riz hydratés atteignent le seuil minimum de 30 % doit être d'au moins 3 heures à la température ambiante, cette durée pouvant être écourtée lorsque la température de l'eau est plus haute, la température de l'eau ne pouvant toutefois pas dépasser 60°C et de préférence 50°C environ. Grâce à cette opération de trempage, on hydrate les grains de riz sans les gonfler.

Le deuxième stade du procédé suivant l'invention consiste à sécher sous vide d'au plus 0,6 bar absolu, les grains de riz ayant subi le traitement précédent de trempage. On préfère mettre sous vide de 0,2 bar absolu pendant au moins 30 minutes.

Le troisième stade du procédé suivant l'invention consiste à mettre les grains de riz dans une enceinte et à envoyer de la vapeur d'eau sous pression dans l'enceinte, de manière à porter la température dans l'enceinte à au moins 120°C pendant au moins 10 minutes. On peut envoyer notamment de la vapeur d'eau sous une pression de 1 bar dans l'enceinte. La température dans l'enceinte ne doit pas être inférieure à 120°C mais si elle dépasse 120°C, pour aller jusqu'à 150°C, on peut diminuer la durée du traitement par la vapeur. A 120°C, il faut en général au moins 10 minutes pour obtenir un traitement à la vapeur correct qui gélatinise complètement l'amidon au coeur des grains de riz.

On obtient ainsi après usinage, c'est-à-dire après avoir enlevé par abrasion les enveloppes périphériques, des grains de riz dont le diagramme de diffraction de rayons X ne comporte plus les pics de l'amidon natif pour $2\theta = 9,9°$ ; $11,2°$; $15°$ ; $17°$ ; $18°$ et $23,3°$ et qui sont caractérisés en ce qu'après cuisson de 100 g de grains de riz dans 1 litre d'eau à 100°C pendant 10 minutes et refroidissement pendant 15 minutes à la température ambiante, les grains de riz cuits et refroidis ont, mesurés au viscoélastographe Chopin, une fermeté inférieure à 65 et une recouvrance élastique inférieure à 35, ce qui traduit leurs bonnes qualités gustatives. Ces grains de riz, bien que ne nécessitant qu'une cuisson de 10 minutes environ, ont des qualités gustatives comparables à celles de grains de riz étuvés classiques ayant subi une cuisson de 17 minutes environ.

Les diagrammes de diffraction sont obtenus avec un générateur de rayons X (marque Inel) opérant à 40 KV et 30 mA. L'échantillon est broyé puis scellé entre deux feuilles d'aluminium pour réaliser le spectre de diffraction de l'amidon.

Le viscoélastographe permet d'évaluer les caractéristiques visco-élastiques du riz cuit en traçant des courbes de déformation des grains en fonction du temps sous une force constante puis après suppression de la force. Il permet en particulier d'apprécier la fermeté et l'élasticité des grains de riz qui sont les critères principaux caractérisant la texture des riz étuvés. Pour la mesure au viscoélastographe Chopin, 100g de grains de riz sont cuits dans un litre d'eau bouillante salée à 7g/ litre. A la fin de la cuisson les grains sont égouttés pendant une minute sur un tamis d'ouverture 1,25 mm puis mis à refroidir pendant 15 minutes dans une boîte de Petri de 60 mn placée sur une plaque éponge humide et recouverte par une boîte de Petri de 80 mm de façon que cette dernière crée un joint étanche avec l'eau qui imbibe la plaque éponge.

3 grains ainsi refroidis sont ensuite placés sur le plateau du viscoélastographe pour la mesure.

Le cycle de mesure consiste à appliquer pendant 40 secondes une force de 700g puis à la retirer pendant les 20 secondes suivantes. On note l'épaisseur E des grains avant application de la force, l'épaisseur $e_1$ après écrasement 40 secondes et l'épaisseur $e_2$ après le relâchement de 20 secondes. A partir de ces valeurs, on calcule :

$$\text{La fermeté } F = 100. \ (e1/E)$$

$$\text{La recouvrance élastique} = 100((e2-e1)/(E-e1))$$

6 mesures sont effectuées sur la même cuisson pour calculer la moyenne et l'écart-type sur les 6 résultats obtenus ;

Il s'avère également que les grains de riz obtenus suivant l'invention sont moins colorés que les grains antérieurs susceptibles de cuire en 10 minutes. Leur couleur peut être définie par

$$L > 62$$

$$a < 3$$

$$b < 18,5$$

La mesure de couleur des grains est réalisée à l'aide d'un chromamètre Minolta CR-200 et du système 1∗a∗b (L = variable de clarté, a = indice de rouge et b = indice de jaune). La mesure est effectuée sur 60 g de grains de riz placés dans la cellule de mesure. La mesure est réalisée sur 6 échantillons différents. On calcule ensuite la moyenne et l'écart type des mesures.

L'exemple suivant illustre l'invention.

5 tonnes de riz cargo long grain type B sont placés dans une cuve et recouverts avec de l'eau à 50°C. Le riz est laissé en contact avec l'eau pendant 5 heures. A la fin de cette période son humidité atteint 30,7%. Il est alors écoutté, transféré dans une enceinte rotative et mis sous vide de 0,3 bar absolu pendant 30 minutes.

Ce riz cargo trempé est ensuite chauffé par de la vapeur d'eau sous pression de 1 bar jusqu'à 125°C et maintenu à cette pression et cette température pendant 10 minutes.

Le riz cargo ainsi traité est ensuite séché sous vide de 0,2 bar absolu pendant 3 heures, son humidité redescend ainsi à 17,6%. Il est alors rapidement refroidi à l'air, usiné selon le procédé traditionnel et séché jusqu'à 12%, humidité requise pour sa conservation ;

Le riz ainsi traité, cuit pendant 10 minutes à l'eau bouillante et refroidi 15 minutes selon le protocole défini ci-dessus présente les caractéristiques de texture suivantes mesurées au viscoélastographe :

$$F_{moy} = 62,5 - \text{écart type sur 6 mesures} = 2,8$$

$$R_{moy} = 29,3 - \text{écart type sur 6 mesures} = 3,8$$

Avant cuisson, sa couleur est définie par

$$L_{moy} = 63,88 \ (\text{écart type} = 0,03)$$

$$a_{moy} = 1,94 \ (\text{écart type} = 0,03)$$

$$b_{moy} = 18,25 \ (\text{écart type} = 0,04)$$

## Comparaison avec un autre riz

Le riz étuvé "Uncle Ben's Riz long grain type B 10 mn de cuisson -codé par son n° de lot de fabrication 03.08.96C" cuit et refroidi dans les mêmes conditions que le riz cité en exemple donne les résultats suivants :

$$F_{moy} = 72,1 - \text{écart type sur 6 mesures} = 1,1$$

$$R_{moy} = 51,8 - \text{écart type sur 6 mesures} = 4,1$$

Avant cuisson, sa couleur est définie par

$$L_{moy} = 59,19 \text{ (écart type = 0,03)}$$

$$a_{moy} = 4,24 \text{ (écart type = 0,06)}$$

$$b_{moy} = 19,30 \text{ (écart type = 0,02)}$$

Un jury d'expert en analyse sensorielle du riz distingue très aisément ces deux riz. Le riz suivant l'invention est moyennement ferme et élastique alors que le riz Uncle Ben's est considéré comme très ferme et très élastique.

Les couleurs des deux produits se différencient très facilement à l'oeil nu. Le riz suivant l'invention est jaune clair, le riz Uncle Ben's est jaune foncé.

### Revendications

1. Grain de riz dont le diagramme de diffraction des rayons X ne comporte pas les pics de l'amidon natif pour 2θ = 9,9° ; 11,2°; 15° ; 17° ; 18° et 23,3°, caractérisé en ce qu'après cuisson de 100 g de grains de riz dans 1 litre d'eau à 100°C pendant 10 minutes et refroidissement pendant 15 minutes à la température ambiante les grains de riz cuits et refroidis ont, mesurés au viscoélastographe Chopin, une fermeté inférieure à 65 et une recouvrance élastique inférieure à 35.

2. Grain suivant la revendication 1, caractérisé en ce que sa couleur évaluée au chromamètre Minolta CR-200 dans le système L, a, b. L étant la variable de clarté, a l'indice de rouge et b l'indice de jaune est définie par

$$L > 62$$

$$a < 3$$

$$b < 18,5$$

3. Procédé de préparation de grains de riz qui consiste à mettre des grains de riz Cargo en contact avec une quantité d'eau telle que les grains y soient complètement immergés pendant une durée suffisante pour que la teneur en eau des grains de riz hydratés atteignent un seuil minimum, à mettre les grains de riz hydratés dans une enceinte, à envoyer de la vapeur d'eau sous pression dans l'enceinte de manière à porter la température dans l'enceinte à au moins 120°C pendant au moins 10 minutes et, de préférence, pendant 10 minutes, et à obtenir des grains de riz traités à la vapeur puis à mettre l'enceinte sous un vide d'au plus 0,2 bar absolu pendant un temps suffisant pour que la teneur en eau des grains de riz traités à la vapeur soit inférieure à 20 % en poids, caractérisé en ce que

a) le seuil minimum de la teneur en eau des grains de riz hydratés est au moins de 30 % en poids, et
b) un stade de séchage sous vide d'au plus 0,6 bar absolu est intercalé entre la mise en contact avec de l'eau et l'envoi de vapeur d'eau sous pression jusqu'à ce que les grains de riz n'ait plus de couche d'eau en surface.

### Patentansprüche

1. Reiskorn, dessen Röntgen(beugungs)diagramm die Peaks der nativen Stärke für 2θ = 9,9°; 11,2°; 15°; 17°; 18° und 23,3° nicht aufweist, dadurch gekennzeichnet, daß nach dem Kochen von 100 g Reiskörnern in 1 Liter Wasser bei 100 °C während 10 Minuten und Abkühlung während 15 Minuten auf die Umgebungstemperatur die gekochten und abgekühlten Reiskörner, mit dem Chopin-Viscoelastographen gemessen, eine Festigkeit von weniger als 65 und eine elastische Erholung von weniger als 35 haben.

2. Korn nach Anspruch 1, dadurch gekennzeichnet, daß seine mit dem Minolta-Chromameter CR-200 ausgewertete Farbe im System L, a, b, wobei L die Helligkeitsvariable, a der Rotindex und b der Gelbindex ist, definiert wird durch

$$L > 62$$

$$a < 3$$

$$b < 18,5.$$

3. Verfahren zur Aufbereitung von Reiskörnern, das daraus besteht, Cargoreiskörner mit einer solchen Menge Wasser zu kontaktieren, daß die Körner völlig davon bedeckt sind, während einer Zeitdauer, die ausreicht, daß der Wassergehalt der hydrierten Reiskörner einen Mindestwert erreicht, die hydrierten Reiskörner in ein Behältnis zu bringen, das Behältnis mit Wasserdampf zu beaufschlagen, um die Temperatur im Behältnis während zumindest 10 Minuten und vorzugsweise während 10 Minuten auf zumindest 120° zu bringen und dampfbehandelte Reiskörner zu erhalten,
dann das Behältnis in ein Vakuum von höchstens 0,2 bar absolut während einer Zeitdauer zu bringen, die ausreicht, daß der Wassergehalt der dampfbehandelten Reiskörner weniger als 20 Gew.-% beträgt, dadurch gekennzeichnet, daß

a) der Minimumwert des Wassergehalts der hydrierten Reiskörner zumindest 30 Gew.-% beträgt und

b) eine Trocknungsstufe im Vakuum von höchstens 0,6 bar absolut zwischen der Kontaktierung mit Wasser und der Wasserdampf-beaufschlagung unter Druck zwischengeschaltet wird, bis die Reiskörner an der Oberfläche keine Wasserschicht mehr aufweisen.

absolute for a time sufficient for the water content of the steam treated grains to be less than 20 % by weight,
characterized in that,

a) the minimum threshold for the water content of the hydrated rice grains is at least 30 % by weight, and
b) a drying stage under a vacuum of no more than 0.6 bar is interposed between contacting with water and introducing steam under pressure until the rice grains no longer have a water layer on the surface.

## Claims

1. Rice grain of which the X-ray diffraction diagram does not include native starch peaks for $2\theta = 9.9°$; $11.2°$; $15°$; $17°$; $18°$ and $23.3°$, characterized in that after cooking 100 g of rice grains in 1 litre of water at $100°C$ for 10 minutes and cooling for 15 minutes at ambient temperature, the cooked and cooled rice grains have a rigidity of less than 65 and an elastic recovery of less than 35, as measured on the Chopin viscoelastograph.

2. Grain according to claim 1, characterized in that its colour, evaluated on the Minolta CR-200 colorimeter in the L, a, b system, L being the lightness variable, a being the red index and b being the yellow index, is defined by:

$$L > 62$$

$$a < 3$$

$$b < 18.5$$

3. Method for preparing rice grains which consists of putting grains of Cargo rice in contact with a quantity of water such that the grains are completely immersed therein for a period sufficient for the water content of the hydrated rice grains to reach a minimum threshold, of putting the hydrated rice grains in a chamber, of introducing steam under pressure into the chamber so as to raise the temperature in the chamber to at least $120°C$ for at least 10 minutes, and preferably for 10 minutes, and of obtaining steam-treated rice grains, and then of putting the chamber under a vacuum of no more than 0.2 bar